# EUROPÄISCHE PATENTSCHRIFT

(11) **EP 3 102 841 B1**
(45) Veröffentlichungstag und Bekanntmachung des Hinweises auf die Patenterteilung: **02.12.2020**
(21) Anmeldenummer: 15701793.0
(22) Anmeldetag: 29.01.2015
(51) Int. Cl.: B60N 2/12, F16C 1/22

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, NOTAMMENT SIÈGE DE VÉHICULE AUTOMOBILE

(30) Priorität: 07.02.2014 DE 102014202315; 04.04.2014 DE 102014206537
(43) Veröffentlichungstag der Anmeldung: 14.12.2016
(73) Patentinhaber: Adient Luxembourg Holding S.à r.l., 1855 Luxembourg (LU)
(72) Erfinder: PLUTA, Wolfgang, 67699 Heiligenmoschel (DE); WOLF, Christian, 67811 Dielkirchen (DE); DILL, Thomas, 67699 Heiligenmoschel (DE); CHRISTOFFEL, Thomas, 66909 Herschweiler-Pettersheim (DE)
(74) Vertreter: Liedhegener, Ralf
(86) Internationale Anmeldenummer: PCT/EP2015/051821
(87) Internationale Veröffentlichungsnummer: WO 2015/117889

(56) Entgegenhaltungen:
- DE-A1-102009 037 819
- DE-A1-102011 119 390
- DE-U1-202010 015 143

## Beschreibung

Die Erfindung betrifft einen Fahrzeugsitz, insbesondere Kraftfahrzeugsitz, mit einem Sitzteil, einer gegenüber dem Sitzteil um eine Schwenkachse schwenkbaren Lehne, mindestens einem Sitzschienenpaar zur Längsverstellung des Fahrzeugsitzes und einer Sitzschienen-Verriegelungsvorrichtung zur Verriegelung des mindestens einen Sitzschienenpaars, wobei die Lehne eine zum Personentransport geeignete Gebrauchsstellung und eine Easy-Entry-Stellung, in welcher die Lehne um die Schwenkachse nach vorne geschwenkt ist und die Sitzschienen-Verriegelungsvorrichtung über eine Bowdenzugeinheit geöffnet ist, einnehmen kann und wobei für ein Zurückschwenken der Lehne aus der Easy-Entry-Stellung in Richtung der Gebrauchsstellung eine Grenzkraft überwunden werden muss.

### Stand der Technik

Durch Benutzung sind Fahrzeugsitze mit einem Sitzteil und einer Lehne bekannt, die auf Sitzschienen relativ zur Fahrzeugstruktur verschiebbar sind. Die Lehne ist relativ zu dem Sitzteil schwenkbar und kann eine Easy-Entry-Stellung einnehmen, um den Zugang zu einer hinter dem Fahrzeugsitz angeordneten weiteren Fahrzeugsitzreihe zu erleichtern. Dazu wird die Lehne des Fahrzeugsitzes zumindest teilweise nach vorne geschwenkt und die Sitzschienen über eine Bowdenzugeinheit geöffnet. Der gesamte Fahrzeugsitz kann anschließend durch Druck auf die Lehne nach vorne geschoben werden. Zusätzlich zur Easy-Entry-Stellung kann die Lehne eine Ladebodenstellung einnehmen, in der die Lehne nach vorne in eine möglichst waagerechte Position geschwenkt ist. Diese Lehnenposition wäre zum Erreichen der Easy-Entry-Position ungeeignet, da der Benutzer des Fahrzeugsitzes diesen am besten bei nur teilweise vorgeschwenkter Lehne nach vorne schieben kann.

Aus der DE 102 06 303 A1 ist ein Beschlag für ein zweitüriges Kraftfahrzeug bekannt, welcher dazu dient, durch das vorwärts erfolgende Freischwenken der Lehne in eine Easy-Entry-Stellung in Kombination mit einem Vorschieben des Fahrzeugsitzes den Zugang zum Fond zu erleichtern und für den Gebrauch durch einen Insassen verschiedene Neigungseinstellungen der Lehne zur Verfügung zu stellen. Um ein ungewolltes Zurückschwenken der Lehne, beispielsweise bei einer zu starken Polsterung im Übergangsbereich zwischen der Lehne und dem Sitzteil, zu verhindern, ist in der freigeschwenkten Stellung eine Festlegung der Lehne mittels einer Klinke vorgesehen. Die Klinke kann durch das Freischwenk-Bedienelement wieder geöffnet werden, beispielsweise wenn der Fahrzeugsitz in die zuvor eingenommene Sitzlängsposition zurückgeschoben ist.

Aus der DE 10 2009 037 819 A1 ist ein Fahrzeugsitz mit einem Einstellbeschlag zur Neigungseinstellung einer Lehne des Fahrzeugsitzes relativ zu einem Sitzteil des Fahrzeugsitzes bekannt, der eine Freischwenkeinheit zum zentrischen Freischwenken der Lehne von wenigstens einer Gebrauchsstellung in eine freigeschwenkte Stellung, das heißt eine Easy-Entry-Stellung, umfasst. Der Beschlag weist zudem ein Beschlagunterteil, das mit dem Sitzteil verbunden ist, und das den Einstellbeschlag trägt, und ein der Freischwenkeinheit zugeordnetes Beschlagoberteil, das mit der Lehne verbunden ist, auf. In der Gebrauchsstellung ist die Freischwenkeinheit mittels einer Klinke formschlüssig verriegelt. In der Easy-Entry-Stellung ist die Lehne mittels dieser Klinke kraftschlüssig gesichert, indem die Klinke das Beschlagoberteil durch Zusammenwirken mit einem Anschlag am Beschlagunterteil festlegt und dabei kraftschlüssig mittels einer Feder gesichert ist, welche am Beschlagunterteil befestigt ist, und in der Easy-Entry-Stellung der Lehne die Klinke beaufschlagt. Die Klinke wirkt in der Easy-Entry-Stellung der Lehne derart außerhalb der Selbsthemmung mit dem Anschlag zusammen, dass durch ein Ziehen an der Lehnenoberkante ein öffnendes Moment auf die Klinke entsteht. Ab einer definierten Grenzkraft wird dadurch die sichernde Kraft der Feder auf die Klinke überwunden, und die Klinke gibt das Beschlagoberteil für ein Zurückschwenken in die Gebrauchsstellung frei.

Eine Bowdenzugeinheit mit einem ersten Seilzug, einem zweiten Seilzug und einer Kompensationsfedereinheit ist in der DE 199 40 813 A1 beschrieben. Bis zu einer Grenzkraft ist der erste Seilzug mit dem zweiten Seilzug über die Kompensationsfedereinheit starr verbunden. Bei Überschreitung der Grenzkraft wird eine mit dem ersten Seilzug und dem zweiten Seilzug in Serie geschaltete Feder in der Kompensationsfedereinheit derart komprimiert, dass ein Abstand zwischen einem Ende des ersten Seilzugs und einem Ende des zweiten Seilzugs gelängt wird. Die Kompensationsfedereinheit dient beispielsweise als Überlastschutz.

Durch Benutzung sind Bowdenzugeinheiten mit einem ersten Seilzug, einem zweiten Seilzug und einer Kompensationsfedereinheit, bei denen bis zu einer Grenzkraft der erste Seilzug mit dem zweiten Seilzug über die Kompensationsfedereinheit starr verbunden ist. Bei Überschreitung der Grenzkraft wird eine mit dem ersten Seilzug und dem zweiten Seilzug in Serie geschaltete Feder in der Kompensationsfedereinheit gelängt, so dass ein Abstand zwischen einem Ende des ersten Seilzugs und einem Ende des zweiten Seilzugs gelängt wird.

### Aufgabe

Der Erfindung liegt die Aufgabe zu Grunde, einen Fahrzeugsitz der eingangs genannten Art zu verbessern, insbesondere eine gleichartige Funktionalität mit weniger Bauteilen bereitzustellen.

### Lösung

Diese Aufgabe wird erfindungsgemäß gelöst durch einen Fahrzeugsitz mit einem Sitzteil, einer gegenüber dem Sitzteil um eine Schwenkachse schwenkbaren Lehne, mindestens einem Sitzschienenpaar zur Längsverstellung des Fahrzeugsitzes und einer Sitzschienen-Verriegelungsvorrichtung zur Verriegelung des mindestens einen Sitzschienenpaars, wobei die Lehne eine zum Personentransport geeignete Gebrauchsstellung und eine Easy-Entry-Stellung, in welcher die Lehne um die Schwenkachse nach vorne geschwenkt ist und die Sitzschienen-Verriegelungsvorrichtung über eine Bowdenzugeinheit geöffnet ist, einnehmen kann, und wobei für ein Zurückschwenken der Lehne aus der Easy-Entry-Stellung in Richtung der Gebrauchsstellung eine Grenzkraft überwunden werden muss, wobei die Grenzkraft von einer Kompensationsfedereinheit der Bowdenzugeinheit erzeugt ist.

Dadurch, dass die Federkraft, die die Lehne in der Easy-Entry-Stellung hält, von einer Kompensationsfedereinheit der Bowdenzugeinheit erzeugt ist, übernimmt die Kompensationsfedereinheit eine weitere Funktion und eine separate Feder kann eingespart werden.

Vorteilhafte Ausgestaltungen, welche einzeln oder in Kombination miteinander eingesetzt werden können, sind Gegenstand der Unteransprüche.

Vorzugsweise umfasst die Bowdenzugeinheit einen ersten Seilzug, einen zweiten Seilzug und die Kompensationsfedereinheit. Bis zu einer Grenzkraft ist der erste Seilzug mit dem zweiten Seilzug über die Kompensationsfedereinheit starr verbunden. Bei Überschreitung der Grenzkraft wird die Länge einer mit dem ersten Seilzug und dem zweiten Seilzug verbundenen Feder der Kompensationsfedereinheit verändert. Die Kompensationsfedereinheit weist vorzugsweise eine Feder auf, die hinsichtlich einer Wirkverbindung zwischen dem ersten Seilzug und dem zweiten Seilzug angeordnet ist. Der erste Seilzug, die Feder und der zweite Seilzug können in Serie geschaltet sein.

Je nach Aufbau der Kompensationsfedereinheit wird die Feder in der Kompensationsfedereinheit beim Überschreiten einer Grenzkraft gelängt oder komprimiert. Ein Abstand zwischen einem Ende des ersten Seilzugs und einem Ende des zweiten Seilzugs kann gelängt werden, wenn die Feder gelängt wird. Dies ist beispielsweise dann der Fall, wenn die Feder eine Schraubenzugfeder ist und ein erstes Ende der Schraubenzugfeder mit dem ersten Seilzug verbunden ist und ein zweites Ende der Schraubenzugfeder mit dem zweiten Seilzug verbunden ist.

Eine andere, bevorzugte Kompensationsfedereinheit ist in der DE 199 40 813 A1 offenbart. Eine Feder in der Kompensationsfedereinheit wird derart komprimiert, dass der Abstand zwischen einem Ende des ersten Seilzugs und einem Ende des zweiten Seilzugs gelängt wird.

In der Easy-Entry-Stellung der Lehne kann in einer bevorzugten Ausführung ein erstes Mittel insbesondere kraftschlüssig und/oder formschlüssig verriegelnd mit einem zweiten Mittel zusammenwirken, wobei eines der Mittel der Lehne und das andere der Mittel dem Sitzteil zugeordnet ist und sich die Mittel nach Überwinden der Grenzkraft und während eines Schwenkens der Lehne relativ zueinander bewegen. Ein Seilzugende des ersten Seilzugs der Bowdenzugeinheit ist vorzugsweise an einem der Mittel befestigt, ein Seilzugende des zweiten Seilzuges an der Sitzschienen-Verriegelungsvorrichtung.

Die Lehne kann mittels zweier an sich bekannter Beschläge an dem Sitzteil angelenkt sein. Das erste und zweite Mittel sind bevorzugt auf genau einer Sitzseite und auf einer zur Sitzmitte zugewandten Seite eines Beschlags angeordnet.

Das erste Mittel kann als eine Wippe mit einem ersten Arm und einem zweiten Arm ausgeführt sein. Das zweite Mittel kann eine Kulisse sein. Einer der Arme der Wippe kann mit der Kulisse zusammenwirken. Insbesondere ein an einem der Arme angebrachter Taster oder eine an dem einen der Arme gelagerte Rolle kann mit der Kulisse zusammenwirken. Dabei findet ein Kontakt zwischen dem Arm oder dem Taster oder der Rolle mit der Kulisse derart statt, dass bei einer Relativbewegung zwischen dem Arm und der Kulisse die Kulissenkontur ein Schwenken der Wippe bewirkt. Eine solche Wippe kann kostengünstig hergestellt werden, beispielsweise als ein Stanzteil aus Metall.

Vorzugsweise ist die Bowdenzugeinheit einerseits an dem anderen der Arme und andererseits an der Sitzschienen-Verriegelungsvorrichtung befestigt. Ein Seilzugende des ersten Seilzugs der Bowdenzugeinheit kann an dem anderen der Arme befestigt sein, ein Seilzugende des zweiten Seilzuges an der Sitzschienen-Verriegelungsvorrichtung.

Die Wippe ist vorzugsweise drehbar am Sitzteil, insbesondere an einem Beschlagunterteil des Sitzteils befestigt. Das Beschlagunterteil verbindet dabei ein zweites Beschlagteil eines Beschlags mit dem Sitzteil. Auf einen separaten Adapter zwischen Sitzteil und Wippe kann verzichtet werden. Es kann jedoch auch ein zusätzlicher Adapter zur Lagerung der Wippe vorgesehen sein.

Die Kulisse ist vorteilhaft fest mit der Lehne verbunden. Die Kulisse kann dabei in eine Lehnenstruktur integriert sein oder als separates Teil ausgebildet sein. Durch Integration der Kulisse in eine Lehnenstruktur kann ein zusätzliches Bauteil eingespart werden. Eine separat ausgebildete Kulisse, die mit der Lehnenstruktur verbunden ist, ermöglicht einen modularen Lehnenbaukasten.

Vorzugsweise weist die Kulisse einen ersten Kulissenabschnitt auf, der der Gebrauchsstellung zugeordnet ist, und einen zweiten Kulissenabschnitt, der durch Zusammenwirken mit der Wippe das Zurückschwenken der Lehne aus der Easy-Entry-Stellung in Richtung der Gebrauchsstellung verhindert, solange die Grenzkraft nicht überwunden ist. Dabei kann der zweite Kulissenabschnitt in radialer Richtung über den ersten Kulissenabschnitt hinausragen, beispielsweise in Form eines Nockens. Der erste Kulissenabschnitt ist vorzugsweise kreisbogenförmig um die Schwenkachse gekrümmt.

Es kann ein Kontakt zwischen dem Arm oder dem Taster oder der Rolle mit dem ersten Kulissenabschnitt stattfinden. Alternativ kann der Arm der Wippe aber auch derart an einem Abstützmittel anliegen, dass im ersten Kulissenabschnitt kein Kontakt stattfindet und der Arm, der Taster oder die Rolle nur mit dem zweiten Kulissenabschnitt und gegebenenfalls mit einem dritten Kulissenabschnitt zusammenwirken.

Durch eine Änderung des Hebelverhältnisses der Wippe, Konturen der Kulisse und/oder der Kennlinie der Kompensationsfedereinheit kann der Bewegungsablauf des Fahrzeugsitzes an die jeweiligen Randbedingungen des Fahrzeugs und Kundenwünsche optimal angepasst werden.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: eine schematische Darstellung eines Fahrzeugsitzes,
- Fig. 2:: eine Seitenansicht von außen auf einen einen Beschlag umgebenden Bereich des Fahrzeugsitzes mit einer Lehne in einer Gebrauchsstellung,
- Fig. 3:: eine Seitenansicht aus Richtung der Sitzmitte auf einen den Beschlag umgebenden Bereich des Fahrzeugsitzes mit einer Lehne in Gebrauchsstellung,
- Fig. 4:: eine Fig. 3 entsprechende Ansicht kurz vor Erreichen einer Easy-Package-Stellung der Lehne,
- Fig. 5:: eine Fig. 3 entsprechende Ansicht in Easy-Package-Stellung der Lehne,
- Fig. 6:: eine Fig. 2 entsprechende Ansicht in Easy-Package-Stellung der Lehne,
- Fig. 7:: eine schematische Darstellung des Fahrzeugsitzes in Easy-Package-Stellung der Lehne,
- Fig. 8:: eine Detailansicht aus Fig. 5 mit einer Kräftebetrachtung und
- Fig. 9 :: eine Detailansicht aus Fig. 8 auf einen Kontaktbereich zwischen einer Wippe und einem Nocken einer Kulisse.

Ein Fahrzeugsitz 1 ist nachfolgend in einem kartesischen Koordinatensystem beschrieben, das durch drei senkrecht aufeinander stehende Raumrichtungen definiert ist. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines Insassen des Fahrzeugsitzes 1 in normaler Sitzposition, wobei der Fahrzeugsitz 1 wie üblich in Fahrtrichtung ausgerichtet ist. Der erfindungsgemäße Fahrzeugsitz 1 kann jedoch auch in abweichender Ausrichtung, beispielsweise quer zur Fahrtrichtung, verbaut werden.

Der Fahrzeugsitz 1 weist ein Sitzteil 3 und eine Lehne 5 auf, die relativ zum Sitzteil 3 um eine in Querrichtung verlaufende und durch zwei Beschläge 7 definierte Schwenkachse S schwenkbar ist. Die beiden Beschläge 7 sind dabei über eine vorliegend ebenfalls in Querrichtung ausgerichtete, konzentrisch zur Schwenkachse S angeordnete Übertragungsstange 9 miteinander wirkverbunden, so dass ein Entriegeln eines der beiden Beschläge 7 zwangsweise eine Entriegelung des anderen Beschlags 7 bewirkt.

Jeder der beiden Beschläge 7 umfasst ein erstes Beschlagteil 7.1 und ein bei entriegeltem Beschlag 7 relativ zu diesem um die Schwenkachse S drehbares zweites Beschlagteil 7.2. In baulicher Hinsicht bilden die beiden Beschlagteile 7.1 und 7.2 (und ein Umklammerungsring) zusammen eine scheibenförmige Einheit. Mit der Montage des Beschlags 7 ist das erste Beschlagteil 7.1 mittels eines Beschlagoberteils 7.3 fest mit der Struktur der Lehne 5 verbunden, also lehnenfest. Das zweite Beschlagteil 7.2 ist mittels eines Beschlagunterteils 7.4 fest mit der Struktur des Sitzteils 3 verbunden, also sitzteilfest. Die beiden Beschläge 7 sind als Rastbeschlag ausgebildet, wie dieser beispielsweise aus der DE 10 2009 041 492 A1 bekannt ist.

Der Fahrzeugsitz 1 ist mittels zweier in Längsrichtung x ausgerichteter und an sich bekannter Sitzschienenpaare in Längsrichtung x längsverschiebbar an einer Fahrzeugstruktur des Fahrzeugs angebunden. Die beiden Sitzschienenpaare umfassen zwei relativ zur Fahrzeugstruktur bewegliche, parallel zueinander angeordnete erste Schienen 11 und zwei zugeordnete, fahrzeugstrukturfeste, zweite Schienen 13, welche die ersten Schienen 11 umgreifen und führen. Mittels jeweils einer an sich bekannten Sitzschienen-Verriegelungsvorrichtung 17 können die jeweils ersten Schienen 11 mit den jeweils zweiten Schienen 13 verriegelt werden. Bei entriegelten Sitzschienen-Verriegelungsvorrichtungen 17 können die ersten Schienen 11 relativ zu den zweiten Schienen 13 verschoben und damit die Position des Fahrzeugsitzes 1 relativ zur Fahrzeugstruktur in Längsrichtung x verändert werden. In einer Abwandlung des Ausführungsbeispiels weist der Fahrzeugsitz 1 nur genau eine Sitzschienen-Verriegelungsvorrichtung 17 auf, und zwar zwischen einem der beiden Sitzschienenpaare wirkend.

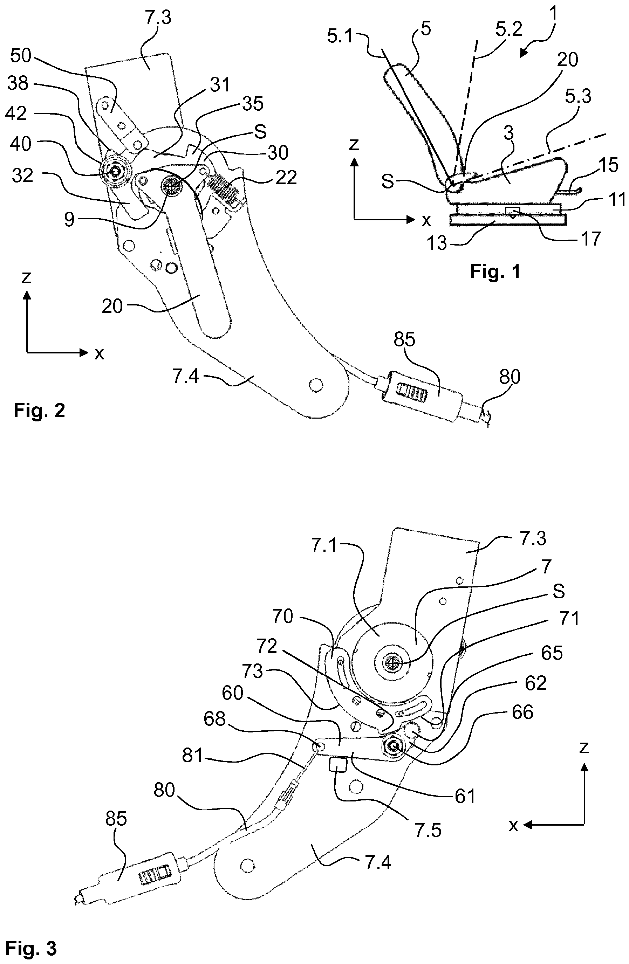

Die Lehne 5 des Fahrzeugsitzes 1 kann aus einer in der Figur 1 dargestellten, gegenüber der Vertikalrichtung z nach hinten geneigten und zum Personentransport geeigneten Gebrauchsstellung 5.1 sowohl in eine Ladebodenstellung 5.3, bei welcher die Lehne 5 um die Schwenkachse S nach vorne auf das Sitzteil 3 geschwenkt ist, als auch in eine Easy-Entry-Stellung 5.2 gebracht werden. In der Easy-Entry-Stellung 5.2 ist die Lehne 5 um die Schwenkachse S in eine gegenüber der Vertikalrichtung z nach vorne geschwenkte Stellung vorgeschwenkt, jedoch nicht bis zur Ladebodenstellung 5.3. Zusätzlich ist bei Erreichen der Easy-Entry-Stellung 5.2 die Sitzschienen-Verriegelungsvorrichtung 17 entriegelt und der Fahrzeugsitz 1 kann nach vorne geschoben werden. Dadurch kann ein möglichst großer Ein- bzw. Ausstiegsbereich für einen hinter dem Fahrzeugsitz 1 angeordneten, in den Figuren nicht dargestellten, Sitz einer hinteren, insbesondere dritten Sitzreihe zur Verfügung gestellt werden.

In der Ladebodenstellung 5.3 ist die Lehne 5 gegenüber der Easy-Entry-Stellung 5.2 nochmals weiter nach vorne geschwenkt und liegt vorzugsweise auf dem Sitzteil 3 auf.

Für ein von der Easy-Entry-Stellung 5.2 der Lehne 5 unabhängiges Entriegeln der Sitzschienen-Verriegelungsvorrichtungen 17 und somit für die Einstellbarkeit des Fahrzeugsitzes 1 in Längsrichtung x ist ein im vorderen Bereich des Fahrzeugsitzes 1 unterhalb des Sitzteils 3 angeordneter, schwenkbarer Bügel 15 vorgesehen, dessen Enden in an sich bekannter Weise mit den Sitzschienen-Verriegelungsvorrichtungen 17 wirkverbunden sind. Der Bügel 15 ermöglicht eine manuelle Entriegelung der Sitzschienenpaare 11, 13 durch ein Hochziehen des Bügels 15. Ein Verschieben des Fahrzeugsitzes 1 innerhalb eines vorgegebenen Bereichs in Längsrichtung x kann erfolgen, solange der Bügel 15 hochgezogen und dadurch die Sitzschienen-Verriegelungsvorrichtungen 17 außer Eingriff gehalten werden. Der Bügel 15 kann hierbei an einem versteifenden Übertragungsbügel angebracht sein, welcher bei einem Hochziehen des Bügels 15 gedreht wird. Dieser Übertragungsbügel kann auf beiden Sitzseiten an der jeweils ersten Schiene 11 gelagert sein und koppelt den Verriegelungszustand der beiden Sitzschienen-Verriegelungsvorrichtungen 17 der beiden Sitzschienenpaare 11, 13 miteinander.

Ein Bedienelement 20 ist auf einer Sitzaußenseite mit der Übertragungsstange 9 wirkverbunden, so dass eine Betätigung des Bedienelements 20 die Übertragungsstange 9 dreht, entweder unmittelbar bei Betätigung oder erst nach Durchfahren eines geringen Leerweges. Dadurch werden die beiden Beschläge 7 geöffnet und die Lehne 5 ist relativ zum Sitzteil 3 um die Schwenkachse S schwenkbar. Eine erste Feder 22 spannt das Bedienelement 20 entgegen einer Betätigungsrichtung in Richtung einer Ausgangslage vor, in der die beiden Beschläge 7 verriegelt sind.

Im oberen Bereich der Lehne 5 kann zusätzlich ein in der Figur 1 nicht dargestelltes zweites Bedienelement zum Entriegeln der Beschläge 7, insbesondere für ein Vorschwenken der Lehne 5 in die Easy-Entry-Stellung 5.2, vorgesehen sein, das mit dem Bedienelement 20 zumindest mittelbar gekoppelt ist.

Vorliegend ist zusätzlich noch eine Komforteinstellung der Lehne 5 möglich, die eine Feineinstellung eines Lehnenneigungswinkels um die Schwenkachse S in einem kleinen Komfortwinkelbereich (beispielsweise bis zu 10° nach hinten und bis zu 2° nach vorne) um die Gebrauchsstellung 5.1 herum ermöglicht. Die Komforteinstellung der Lehne 5 kann jedoch auch entfallen.

Auf mindestens einer Sitzaußenseite ist eine Klinke 30 auf einer Klinkendrehachse 40 drehbar an dem Beschlagunterteil 7.4 gelagert. Die Klinkendrehachse 40 ist exzentrisch zur Schwenkachse S der Lehne 5 angeordnet, vorliegend in einem hinter und oberhalb der Schwenkachse S gelegenen Bereich des Beschlagunterteils 7.4. Die Klinkendrehachse 40 ist vorliegend identisch mit der Mittelachse eines ersten Lagerbolzens 40, der mit dem Beschlagunterteil 7.4 in an sich bekannter Weise vernietet oder in dieses eingeschraubt ist.

Die Klinke 30 ist in Querrichtung zwischen dem Beschlagunterteil 7.4 und dem Bedienelement 20 angeordnet.

Die Klinke 30 weist eine V-förmige Form mit einem ersten Schenkel 31 und einem zweiten Schenkel 32 auf, die zwischen sich einen Winkel von etwa 50° einschließen. Die Erfindung ist jedoch nicht diesen Winkel beschränkt.

In dem Bereich, in dem der erste Schenkel 31 und der zweite Schenkel 32 zusammenlaufen, ist eine Öffnung zur Aufnahme des ersten Lagerbolzens 40 und damit zur drehbaren Lagerung der Klinke 30 vorgesehen.

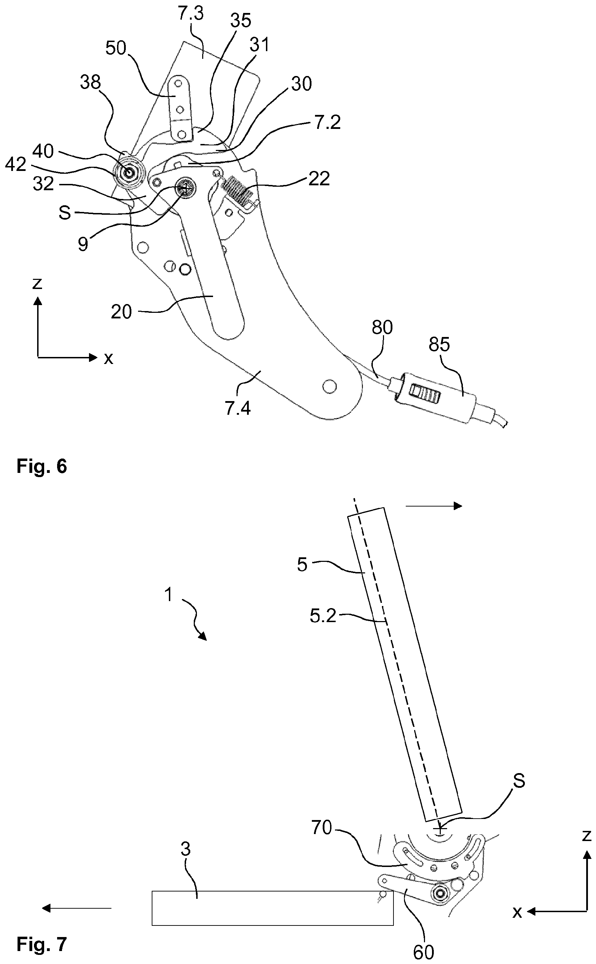

Eine zweite Feder 42 spannt die Klinke 30 gegen einen an dem Beschlagoberteil 7.3 befestigten Anschlag 50 vor, in den Figuren 2 und 6 gegen den Uhrzeigersinn. Der Anschlag 50 ist vorliegend als Blechwinkel ausgebildet, der das Beschlagunterteil 7.4 außen übergreift.

Der erste Schenkel 31 der Klinke 30 weist auf seiner von dem zweiten Schenkel 32 weg orientierten Seite eine um die Schwenkachse S gekrümmte Grundkontur auf, die in einer zu der Klinkendrehachse 40 hin orientieren Richtung eine derartige Einkerbung aufweist, dass eine Nase 35 ausgebildet ist. Die Nase 35 dient einem Zusammenwirken mit dem Anschlag 50 in der Easy-Entry-Stellung 5.2 der Lehne 5. In Richtung der Klinkendrehachse 40 ist die gekrümmte äußere Grundkontur des ersten Schenkels 31 durch einen radial nach außen abstehenden Gegenanschlag 38 begrenzt, an dem der Anschlag 50 in der hintersten Stellung der Lehne 5 anliegt. Die hinterste Stellung der Lehne 5 entspricht bei einer Ausführung des Beschlags 7 ohne Komfortwinkelbereich der Gebrauchsstellung 5.1.

Auf der, in Querrichtung gesehen, zur Sitzmitte hin orientierten Seite des Beschlagunterteils 7.4 ist eine Wippe 60 auf einer Wippendrehachse 66 drehbar an dem Beschlagunterteil 7.4 gelagert. Die Wippendrehachse 66 ist exzentrisch zur Schwenkachse S der Lehne 5 angeordnet, vorliegend in einem unterhalb der Schwenkachse S gelegenen Bereich des Beschlagunterteils 7.4. Die Wippendrehachse 66 ist vorliegend identisch mit der Mittelachse eines zweiten Lagerbolzens 66, der mit dem Beschlagunterteil 7.4 in an sich bekannter Weise vernietet oder in dieses eingeschraubt ist.

Die Wippe 60 weist eine V-förmige Form mit einem ersten Arm 61 und einem zweiten Arm 62 auf, die zwischen sich einen Winkel von etwa 135° einschließen. Die Erfindung ist jedoch nicht auf diesen Winkel beschränkt.

In dem Bereich, in dem der erste Arm 61 und der zweite Arm 62 zusammenlaufen, ist eine Öffnung zur Aufnahme des zweiten Lagerbolzens 66 und damit zur drehbaren Lagerung der Wippe 60 vorgesehen.

Der erste Arm 61 weist an seinem von der Wippendrehachse 66 abgewandten Ende ein Bowdenzug-Befestigungsmittel 68 auf, vorliegend ein Loch zum Einhängen eines ersten Seilzugs 81 einer Bowdenzugeinheit 80. Der zweite Arm 62 weist an seinem von der Wippendrehachse 66 abgewandten Ende eine drehbar an dem zweiten Arm 62 gelagerte Rolle 65 auf, die im Zusammenspiel mit einer an dem Beschlagoberteil 7.3 befestigten Kulisse 70 als Taster dient. Der Taster muss nicht als Rolle 65 ausgebildet sein, sondern könnte beispielsweise auch ein aus dem zweiten Arm 62 ausgeformter Nocken sein.

Die Kulisse 70 weist eine ringsegmentförmige Grundform auf, die um die Schwenkachse S gekrümmt verläuft. Die Kulisse 70 ist vorliegend ein an dem Beschlagoberteil 7.3 befestigtes, insbesondere angeschweißtes, Blechprägeteil, kann in einer Abwandlung des Ausführungsbeispiels jedoch auch einteilig aus dem Beschlagoberteil 7.3 ausgestellt sein.

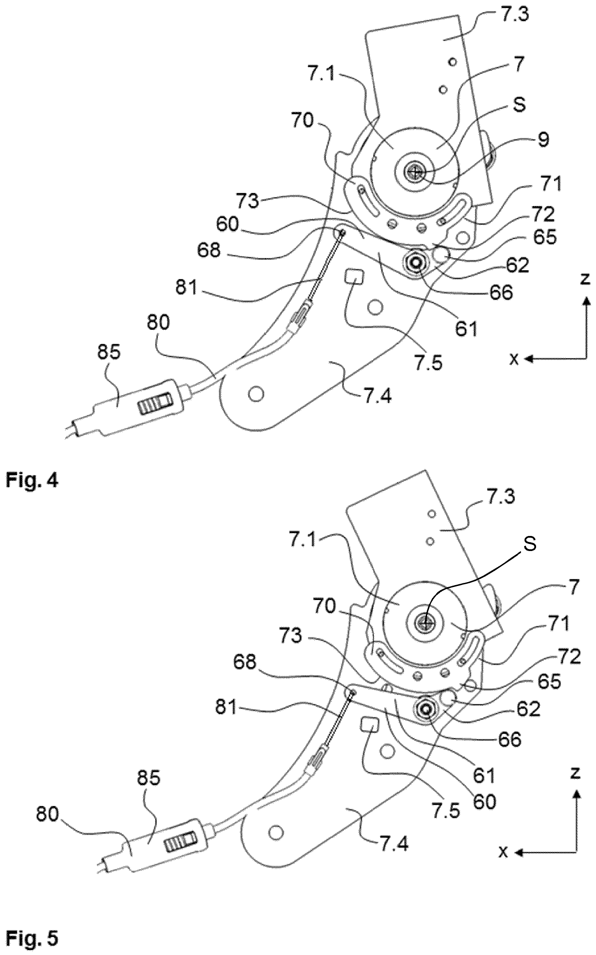

Die Kulisse 70 umfasst eine radial nach außen gerichtete, als Steuerkontur dienende Außenkontur, die mit der Rolle 65 der Wippe 60 zusammenwirkt. Ein erster Kulissenabschnitt 71 liegt der Rolle 65 in der Gebrauchsstellung 5.1 der Lehne 5 gegenüber. Ein den ersten Kulissenabschnitt 71 radial nach außen überragender zweiter Kulissenabschnitt ist als Nocken 72 ausgebildet und kommt beim Übergang der Lehne 5 von der Gebrauchsstellung 5.1 in die Easy-Entry-Stellung 5.2 mit der Rolle 65 in Kontakt und drückt diese in radialer Richtung von der Schwenkachse S weg. Dadurch wird die Wippe 60 gedreht (in den Figuren 3, 4 im Uhrzeigersinn). Die Nockenkontur des Nockens 72 ist leicht spiralförmig um die Schwenkachse S gekrümmt, so dass der Abstand zwischen dem Nocken 72 und der Schwenkachse S in einer von dem ersten Kulissenabschnitt 71 abgewandten Richtung anwächst. Der Nocken 72 schließt sich in Umfangsrichtung an den ersten Kulissenabschnitt 71 an.

Ein dritter Kulissenabschnitt 73 ist in Umfangsrichtung auf der dem ersten Kulissenabschnitt 71 abgewandten Seite des Nockens 72 angeordnet. Der dritte Kulissenabschnitt 73 liegt gegenüber der Nockenkontur des Nockens 72 in radialer Richtung weiter innen und gegenüber dem ersten Kulissenabschnitt 71 in radialer Richtung weiter außen. Der dritte Kulissenabschnitt 73 liegt der Rolle 65 beim Übergang der Lehne 5 von der Easy-Entry-Stellung 5.2 in die Ladebodenstellung 5.3 gegenüber.

Optional kann ein Abstützmittel 7.5 vorgesehen sein, das vorliegend in Richtung der Wippe 60 aus dem Beschlagunterteil 7.4 ausgeprägt ist, und in der Gebrauchsstellung 5.1 der Lehne 5 an einer von dem zweiten Arm 62 wegweisenden Außenkontur des ersten Arms 61 anliegt. Dadurch ist vermieden, dass die Rolle 65 in der Gebrauchsstellung 5.1 und gegebenenfalls in den Komfortstellungen der Lehne 5 an der Kulisse 70 anliegt.

Die Bowdenzugeinheit 80 verbindet die Wippe 60 direkt oder mittelbar mit den beiden Sitzschienen-Verriegelungsvorrichtungen 17, so dass ein Schwenken der Wippe 60 (in den Figuren 3, 4, 5, 7, 8 und 9 im Uhrzeigersinn) ein Öffnen der Sitzschienen-Verriegelungsvorrichtungen 17 bewirkt.

Die Bowdenzugeinheit 80 umfasst den ersten Seilzug 81 und einen, in den Figuren nicht dargestellten, zweiten Seilzug. Der erste Seilzug 81 ist an der Bodenzug-Befestigung 68 der Wippe 60 befestigt, insbesondere eingehängt. Der zweite Seilzug ist direkt oder mittelbar mit den beiden Sitzschienen-Verriegelungsvorrichtungen 17 verbunden.

Der erste Seilzug 81 und der zweite Seilzug sind mittels einer Kompensationsfedereinheit 85 miteinander verbunden. Die Kompensationsfedereinheit 85 verbindet den ersten Seilzug 81 und den zweiten Seilzug bis zu einer Grenzkraft starr miteinander. Bei Überschreitung der Grenzkraft wird eine mit dem ersten Seilzug 81 und dem zweiten Seilzug in Serie geschaltete Feder in der Kompensationsfedereinheit 85 gelängt, so dass auch der Abstand zwischen einem Ende des ersten Seilzugs 81 und einem Ende des zweiten Seilzugs gelängt wird. In einer Abwandlung des Ausführungsbeispiels sind der erste Seilzug 81 und der zweite Seilzug derart mit der Feder in Serie geschaltet, dass die Feder bei Überschreitung der Grenzkraft komprimiert und dadurch der Abstand zwischen einem Ende des ersten Seilzugs 81 und einem Ende des zweiten Seilzugs gelängt wird, wie in der DE 199 40 813 A1 beschrieben.

Die Figuren 2 und 3 zeigen einen Teil des Fahrzeugsitzes 1 in der Gebrauchsstellung 5.1 der Lehne 5. Die Klinke 30 wird durch den Anschlag 50 in einer Ausgangswinkellage gehalten. Die Wippe 60 liegt an dem Abstützmittel 7.5 an, so dass zwischen der Rolle 65 und dem ersten Kulissenabschnitt 71 geringfügig Luft ist.

In der Figur 4 ist der Beschlag 7 (durch Betätigung des in Fig. 4 nicht dargestellten Bedienhebels 20) in einem entriegelten Zustand und die Lehne 5 in Richtung der Easy-Entry-Stellung 5.2 nach vorne geklappt, ohne jedoch die Easy-Entry-Stellung 5.2 erreicht zu haben. Sobald die Rolle 65 mit dem Nocken 72 der Kulisse 70 in Kontakt kommt, wird die Wippe 60 um die Wippendrehachse 66 ausgelenkt. Dadurch werden mittels der Bowdenzugeinheit 80 die Sitzschienen-Verriegelungsvorrichtungen 17 entriegelt. Bei einem Weiterschwenken der Lehne 5 in Richtung der Easy-Entry-Stellung 5.2 wird die Wippe 60 aufgrund der spiralförmig um die Schwenkachse S gekrümmten Nockenkontur des Nockens 72 weiter ausgelenkt. Der zusätzliche Hub wird nun von der Kompensationsfedereinheit 85 aufgenommen, da sich die Sitzschienen-Verriegelungsvorrichtungen 17 bereits in einem vollständig geöffneten Zustand und in einem Endanschlag befinden.

Die notwendige Kraft zur Entriegelung der Sitzschienen-Verriegelungsvorrichtungen 17 ist geringer als die Grenzkraft der Kompensationsfedereinheit 85. Dadurch ist sichergestellt, dass die Sitzschienen-Verriegelungsvorrichtungen 17 entriegeln, bevor die Kompensationsfedereinheit 85 wirksam wird und zu einer Längung der Bowdenzugeinheit 80 führt.

Die Figuren 5 und 6 zeigen einen Teil des Fahrzeugsitzes 1 in der Easy-Entry-Stellung 5.2 der Lehne 5, das heißt nach Erreichen der Easy-Entry-Stellung 5.2. Die Rolle 65 liegt, in Umfangsrichtung gesehen, nun unmittelbar hinter dem Nocken 72 an dem Nocken 72 an. Die zweite Feder 42 hat die Klinke 30 derart verdreht, dass der Anschlag 50 an der Nase 35 anliegt, so dass die Lehne 5 nicht weiter in Richtung der Ladebodenstellung 5.3 vorgeschwenkt werden kann. Die Kompensationsfedereinheit 85 ist entspannt. In einer Abwandlung des Ausführungsbeispiels bleibt die Kompensationsfedereinheit 85 in diesem Bereich (Rolle 65 liegt an zweitem Kulissenabschnitt 72 an) leicht vorgespannt. Die Sitzschienen-Verriegelungsvorrichtungen 17 sind entriegelt. Der Fahrzeugsitz 1 kann zur Vergrößerung des Einstiegsraums zu einer hinteren Sitzreihe aus einer Ausgangsposition mittels der Schienen 11, 13 nach vorne in eine Easy-Entry-Position verschoben werden.

Der außerhalb einer Selbsthemmung an der Rolle 65 anliegende Nocken 72 verhindert ein Zurückschwenken der Lehne 5 in Richtung der Gebrauchsstellung 5.1. Zum Zurückschwenken der Lehne 5 muss eine Rückschwenkkraft F3 auf den oberen Bereich der Lehne 5 aufgebracht werden, die mindestens so groß sein muss, dass die Grenzkraft der Kompensations-federeinheit 85 überwunden wird, so dass die Feder in der Kompensations-federeinheit 85 gelängt wird. Die Kompensationsfedereinheit 85 erzeugt somit im Zusammenwirken mit dem Nocken 72 ein Grenzdrehmoment nach vorne um die Schwenkachse S, welches überwunden werden muss, um die Lehne 5 wieder in Gebrauchsstellung 5.1 zurückschwenken zu können.

Die Rückschwenkkraft F3 kann durch eine Konturänderung des Nockens 72 beliebig angepasst werden. Auch durch eine Änderung der Hebelübersetzung und der Hebelverhältnisse von Wippe 60 und Klinke 30 kann die Rückschwenkkraft F3 beeinflusst werden.

Zum Weiterschwenken der Lehne 5 aus der Easy-Entry-Stellung 5.2 in Richtung der Ladebodenstellung 5.3 muss das Bedienelement 20 erneut betätigt werden (in Fig. 2 und 6 gegen den Uhrzeigersinn). Das Bedienelement 20 kommt dabei in Kontakt mit dem zweiten Schenkel 32 der Klinke 30 und schwenkt die Klinke 30 derart (in Fig. 2 und 6 im Uhrzeigersinn), dass der Anschlag 50 an der Nase 35 der Klinke 30 vorbeischwenken kann. Die Sitzschienen-Verriegelungsvorrichtungen 17 bleiben aufgrund des Kontakts zwischen der Rolle 65 und dem dritten Kulissenabschnitt 73 auch in der Ladebodenstellung 5.3 geöffnet. Die Kontur des dritten Kulissenabschnitts 73 kann aber auch derart abgewandelt sein, dass in der Ladebodenstellung 5.3 der Lehne 5 die Sitzschienen-Verriegelungsvorrichtungen 17 wieder verriegeln (Einrastfunktion in Ladebodenstellung 5.3). In einer Abwandlung des Ausführungsbeispiels bewirkt eine leichte Vorspannung der Kompensationsfedereinheit 85 eine Kraft von der Rolle 65 auf den dritten Kulissenabschnitt 73. Diese Kraft dient als Dämpfung beim Schwenkvorgang der Lehne 5.

Beim Zurückschieben des Fahrzeugsitzes 1 aus der vorderen Easy-Entry-Position zurück in die Ausgangsposition ist eine dazu notwendige Schienenverschiebekraft kleiner als eine in Längsrichtung x orientierte Kraftkomponente der von einem Benutzer des Fahrzeugsitzes 1 aufzubringende Rückschwenkkraft F3 an der Lehne 5. Dadurch ist gewährleistet, dass der Fahrzeugsitz 1 in Längsrichtung x zuerst zurück in die Ausgangsposition und somit in einen Endanschlag verschoben wird, bevor die Rolle 65 den Nocken 72 überwinden kann und dadurch die Lehne 5 in die Gebrauchsstellung 5.1 zurückgeschwenkt werden kann.

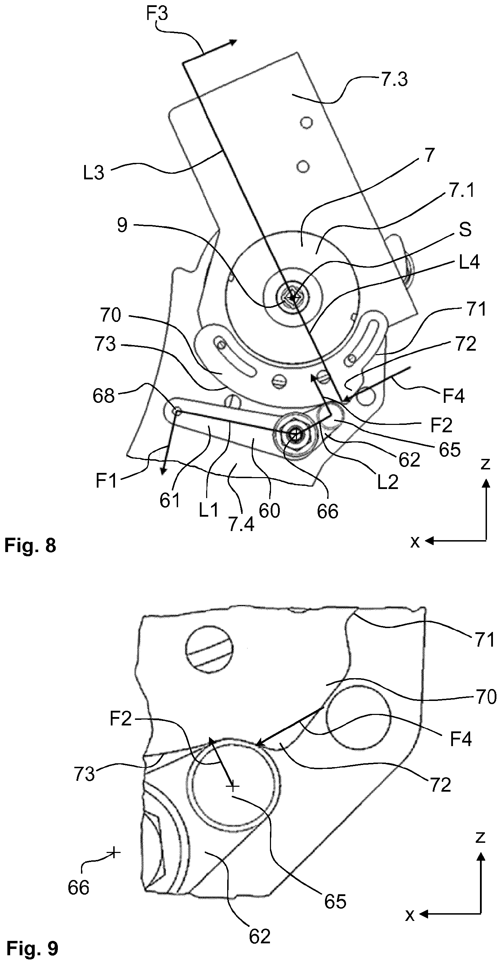

In den Figuren 8 und 9 sind die Kräfteverhältnisse am Fahrzeugsitz 1 unmittelbar vor einem Zurückschwenken der Lehne 5 aus der Easy-Entry-Stellung 5.2 in die Gebrauchsstellung 5.1 schematisch und vereinfacht dargestellt.

Die Kompensationsfedereinheit 85 erzeugt eine erste Kraft F1 im Punkt der Bowdenzugbefestigung 68 in einem ersten Abstand L1 zur Wippendrehachse 66. Die erste Kraft F1 steht annähernd senkrecht auf einer Verbindungslinie zwischen der Schwenkachse S und der Bowdenzugbefestigung 68. Aufgrund der unterschiedlichen Längen von erstem Arm 61 und zweitem Arm 62 und der daraus resultierenden Hebelverhältnisse drückt der zweite Arm 62 die in einem zweiten Abstand L2 von der Schwenkachse S angeordnete Rolle 65 mit einer zweiten Kraft F2 in annähernd radialer Richtung gegen den dritten Kulissenabschnitt 73. Dabei gilt: F2 = F1*L1/L2. Der Kontaktpunkt zwischen der Rolle 65 und der Kulisse 70 wandert bei steigendem F2 von dem dritten Kulissenabschnitt 73 auf den Nocken 72, so dass sich L2 und damit F2 kontinuierlich ändern.

Die Rückschwenkkraft F3, als eine dritte Kraft, wird durch den Benutzer im oberen Bereich der Lehne 5 eingeleitet. Ein dritter Abstand L3 ist als Abstand zwischen der Schwenkachse S und dem Angriffspunkt der Rückschwenkkraft F3 definiert. Ein vierter Abstand L4 ist als Abstand zwischen der Schwenkachse S und dem Kontaktpunkt zwischen der Rolle 65 und dem Nocken 72 definiert.

Aufgrund der vorliegenden Hebelverhältnisse um die Schwenkachse S erzeugt die Rückschwenkkraft F3 eine vierte Kraft F4 an dem Kontaktpunkt zwischen der Rolle 65 und dem Nocken 72, der sich in dem vierten Abstand L4 zur Schwenkachse S befindet. Es gilt: F4 = F3*L3/L4.

Die vierte Kraft F4 bewirkt über den Nocken 72 ein Drehmoment auf die Wippe 60 um die Wippendrehachse 66, das einem durch die erste Kraft F1 erzeugten Drehmoment auf die Wippe 60 entgegen wirkt. Damit die Rolle 65 den Nocken 72 überfahren kann, muss ein zur zweiten Kraft F2 entgegengesetzt wirkender Kraftanteil der vierten Kraft F4 ein größeres Drehmoment um die Wippendrehachse 66 erzeugen als die zweite Kraft F2. Dieser Kraftanteil der vierten Kraft F4 ist abhängig von der Kontur des Nockens. Je steiler die Kontur wird, desto geringer wird auch der in entgegengesetzter Richtung zu F2 wirkende Kraftanteil der vierten Kraft F4.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 5: Lehne
- 5.1: Gebrauchsstellung (der Lehne)
- 5.2: Easy-Entry-Stellung (der Lehne)
- 5.3: Ladebodenstellung (der Lehne)
- 7: Beschlag
- 7.1: erstes Beschlagteil
- 7.2: zweites Beschlagteil
- 7.3: Beschlagoberteil
- 7.4: Beschlagunterteil
- 7.5: Abstützmittel
- 9: Übertragungsstange
- 11: erste Schiene (eines Sitzschienenpaars)
- 13: zweite Schiene (eines Sitzschienenpaars)
- 15: Bügel
- 17: Sitzschienen-Verriegelungsvorrichtung
- 20: Bedienelement
- 22: erste Feder
- 30: Klinke
- 31: erster Schenkel
- 32: zweiter Schenkel
- 35: Nase
- 38: Gegenanschlag
- 40: Klinkendrehachse, erster Lagerbolzen
- 42: zweite Feder
- 50: Anschlag
- 60: erstes Mittel, Wippe
- 61: erster Arm
- 62: zweiter Arm
- 65: Taster, Rolle
- 66: Wippendrehachse, zweiter Lagerbolzen
- 68: Bowdenzug-Befestigungsmittel
- 70: zweites Mittel, Kulisse
- 71: erster Kulissenabschnitt
- 72: zweiter Kulissenabschnitt, Nocken
- 73: dritter Kulissenabschnitt
- 80: Bowdenzugeinheit
- 81: erster Seilzug
- 85: Kompensationsfedereinheit
- F1: erste Kraft
- F2: zweite Kraft
- F3: dritte Kraft, Rückschwenkkraft
- F4: vierte Kraft
- L1: erster Abstand
- L2: zweiter Abstand
- L3: dritter Abstand
- L4: vierter Abstand
- x: Längsrichtung
- z: Vertikalrichtung
- S: Schwenkachse

## Patentansprüche

1. Fahrzeugsitz (1), insbesondere Kraftfahrzeugsitz, mit einem Sitzteil (3), einer gegenüber dem Sitzteil (3) um eine Schwenkachse (S) schwenkbaren Lehne (5), mindestens einem Sitzschienenpaar (11, 13) zur Längsverstellung des Fahrzeugsitzes (1) und einer Sitzschienen-Verriegelungsvorrichtung (17) zur Verriegelung des mindestens einen Sitzschienenpaars (11, 13),
wobei die Lehne (5) eine zum Personentransport geeignete Gebrauchsstellung (5.1) und eine Easy-Entry-Stellung (5.2), in welcher die Lehne (5) um die Schwenkachse (S) nach vorne geschwenkt ist und die Sitzschienen-Verriegelungsvorrichtung (17) über eine Bowdenzugeinheit (80) geöffnet ist, einnehmen kann und wobei für ein Zurückschwenken der Lehne (5) aus der Easy-Entry-Stellung (5.2) in Richtung der Gebrauchsstellung (5.1) eine Grenzkraft überwunden werden muss, **dadurch gekennzeichnet, dass**
die Grenzkraft von einer Kompensationsfedereinheit (85) der Bowdenzugeinheit (80) erzeugt ist.

2. Fahrzeugsitz (1) nach Anspruch 1, **dadurch gekennzeichnet, dass** in der Easy-Entry-Stellung (5.2) ein erstes Mittel (60) verriegelnd mit einem zweiten Mittel (70) zusammenwirkt, wobei eines der Mittel (60, 70) der Lehne (5) und das andere der Mittel (60, 70) dem Sitzteil (3) zugeordnet ist und sich die Mittel (60, 70) nach Überwinden der Grenzkraft und während eines Schwenkens der Lehne (5) relativ zueinander bewegen.

3. Fahrzeugsitz (1) nach Anspruch 2, **dadurch gekennzeichnet, dass** das erste Mittel als eine Wippe (60) mit einem ersten Arm (61) und einem zweiten Arm (62) ausgeführt ist, das zweite Mittel eine Kulisse (70) ist, und einer der Arme (61, 62) mit der Kulisse (70) zusammenwirkt.

4. Fahrzeugsitz (1) nach Anspruch 3, **dadurch gekennzeichnet, dass** ein an einem der Arme (61, 62) angebrachter Taster mit der Kulisse (70) zusammenwirkt.

5. Fahrzeugsitz (1) nach Anspruch 3, **dadurch gekennzeichnet, dass** eine an dem einen der Arme (61, 62) gelagerte Rolle (65) mit der Kulisse (70) zusammenwirkt.

6. Fahrzeugsitz (1) nach einem der Ansprüche 3 bis 5, **dadurch gekennzeichnet, dass** die Bowdenzugeinheit (80) einerseits an dem anderen der Arme (61, 62) und andererseits an der Sitzschienen-Verriegelungsvorrichtung (17) befestigt ist.

7. Fahrzeugsitz (1) nach einem der Ansprüche 3 bis 6, **dadurch gekennzeichnet, dass** die Wippe (60) drehbar am Sitzteil (3), insbesondere an einem Beschlagunterteil (7.4) des Sitzteils (3) befestigt ist.

8. Fahrzeugsitz (1) nach einem der Ansprüche 3 bis 7, **dadurch gekennzeichnet, dass** die Kulisse (70) fest mit der Lehne (5) verbunden ist.

9. Fahrzeugsitz (1) nach einem der Ansprüche 3 bis 8, **dadurch gekennzeichnet, dass** die Kulisse (70) einen ersten Kulissenabschnitt (71) aufweist, der der Gebrauchsstellung (5.1) zugeordnet ist und einen zweiten Kulissenabschnitt (72) aufweist, der durch Zusammenwirken mit der Wippe (60) das Zurückschwenken der Lehne (5) aus der Easy-Entry-Stellung (5.2) in Richtung der Gebrauchsstellung (5.1) verhindert, solange die Grenzkraft nicht überwunden ist.

10. Fahrzeugsitz (1) nach Anspruch 9, **dadurch gekennzeichnet, dass** der zweite Kulissenabschnitt (72) in radialer Richtung über den ersten Kulissenabschnitt (71) hinausragt.

11. Fahrzeugsitz (1) nach Anspruch 9 oder 10, **dadurch gekennzeichnet, dass** der erste Kulissenabschnitt (71) kreisbogenförmig um die Schwenkachse (S) verläuft.

12. Fahrzeugsitz (1) nach einem der Ansprüche 1 bis 11, **dadurch gekennzeichnet, dass** die Bowdenzugeinheit (80) die Kompensationsfedereinheit (85), einen ersten Seilzug (81) und einen zweiten Seilzug umfasst, wobei die Kompensationsfedereinheit (85) eine Feder aufweist, die hinsichtlich einer Wirkverbindung zwischen dem ersten Seilzug (81) und dem zweiten Seilzug angeordnet ist.

13. Fahrzeugsitz (1) nach Anspruch 12, **dadurch gekennzeichnet, dass** der erste Seilzug (81), die Feder und der zweite Seilzug in Serie geschaltet sind.

14. Fahrzeugsitz (1) nach Anspruch 12 oder 13, **dadurch gekennzeichnet, dass** die Feder in der Kompensationsfedereinheit bei einem Überschreiten der Grenzkraft derart gelängt wird, dass ein Abstand zwischen einem Ende des ersten Seilzugs (81) und einem Ende des zweiten Seilzugs gelängt wird.

15. Fahrzeugsitz (1) nach Anspruch 12 oder 13, **dadurch gekennzeichnet, dass** die Feder in der Kompensationsfedereinheit bei einem Überschreiten der Grenzkraft derart komprimiert wird, dass ein Abstand zwischen einem Ende des ersten Seilzugs (81) und einem Ende des zweiten Seilzugs gelängt wird.

## Claims

1. Vehicle seat (1), in particular motor vehicle seat, with a seat part (3), a backrest (5) which can be pivoted about a pivot axis (S) with respect to the seat part (3), at least one seat rail pair (11, 13) for the longitudinal adjustment of the vehicle seat (1), and a seat rail locking apparatus (17) for locking the at least one seat rail pair (11, 13), it being possible for the backrest (5) to assume a use position (5.1) which is suitable for passenger transport and an easy entry position (5.2), in which the backrest (5) is pivoted forwards about the pivot axis (S) and the seat rail locking apparatus (17) is open via a Bowden cable unit (80), and it being necessary for a limit force to be overcome for pivoting back of the backrest (5) out of the easy entry position (5.2) in the direction of the use position (5.1), **characterized in that** the limit force is generated by a compensation spring unit (85) of the Bowden cable unit (80) .

2. Vehicle seat (1) according to Claim 1, **characterized in that**, in the easy entry position (5.2), a first means (60) interacts in a locking manner with a second means (70), one of the means (60, 70) being assigned to the backrest (5), and the other one of the means (60, 70) being assigned to the seat part (3), and the means (60, 70) moving relative to one another after overcoming the limit force and during pivoting of the backrest (5).

3. Vehicle seat (1) according to Claim 2, **characterized in that** the first means is configured as a rocker (60) with a first arm (61) and a second arm (62), the second means is a slotted guide (70), and one of the arms (61, 62) interacts with the slotted guide (70).

4. Vehicle seat (1) according to Claim 3, **characterized in that** a feeler which is attached to one of the arms (61, 62) interacts with the slotted guide (70).

5. Vehicle seat (1) according to Claim 3, **characterized in that** a roller (65) which is mounted on the one of the arms (61, 62) interacts with the slotted guide (70).

6. Vehicle seat (1) according to one of Claims 3 to 5, **characterized in that** the Bowden cable unit (80) is fastened on one side to the other one of the arms (61, 62) and on the other side to the seat rail locking apparatus (17).

7. Vehicle seat (1) according to one of Claims 3 to 6, **characterized in that** the rocker (60) is fastened rotatably to the seat part (3), in particular to a fitting lower part (7.4) of the seat part (3).

8. Vehicle seat (1) according to one of Claims 3 to 7, **characterized in that** the slotted guide (70) is connected fixedly to the backrest (5).

9. Vehicle seat (1) according to one of Claims 3 to 8, **characterized in that** the slotted guide (70) has a first slotted guide section (71) which is assigned to the use position (5.1), and has a second slotted guide section (72) which prevents, by way of interaction with the rocker (60), the backrest (5) from pivoting back out of the easy entry position (5.2) in the direction of the use position (5.1), as long as the limit force is not overcome.

10. Vehicle seat (1) according to Claim 9, **characterized in that** the second slotted guide section (72) protrudes beyond the first slotted guide section (71) in the radial direction.

11. Vehicle seat (1) according to Claim 9 or 10, **characterized in that** the first slotted guide section (71) runs in an arcuate manner about the pivot axis (S).

12. Vehicle seat (1) according to one of Claims 1 to 11, **characterized in that** the Bowden cable unit (80) comprises the compensation spring unit (85), a first control cable (81) and a second control cable, the compensation spring unit (85) having a spring which is arranged between the first control cable (81) and the second control cable with regard to an operative connection.

13. Vehicle seat (1) according to Claim 12, **characterized in that** the first control cable (81), the spring and the second control cable are connected in series.

14. Vehicle seat (1) according to Claim 12 or 13, **characterized in that**, in the case of the limit force being exceeded, the spring in the compensation spring unit is lengthened in such a way that a spacing between one end of the first control cable (81) and one end of the second control cable is lengthened.

15. Vehicle seat (1) according to Claim 12 or 13, **characterized in that**, in the case of the limit force being exceeded, the spring in the compensation spring unit is compressed in such a way that a spacing between one end of the first control cable (81) and one end of the second control cable is lengthened.

## Revendications

1. Siège de véhicule (1), en particulier siège de véhicule automobile, comprenant une assise (3), un dossier (5) pouvant pivoter sur un axe de pivotement (S) par rapport à l'assise (3), au moins une paire de rails de siège (11, 13) destinée au réglage longitudinal du siège du véhicule (1) et un dispositif de verrouillage de rail de siège (17) destiné à verrouiller l'au moins une paire de rails de siège (11, 13),
le dossier (5) pouvant prendre une position d'utilisation (5.1) appropriée au transport de personnes et une position d'accès facile (5.2) dans laquelle le dossier (5) est pivoté vers l'avant sur l'axe de pivotement (S) et le dispositif de verrouillage de rail de siège (17) est ouvert par le biais d'une unité formant câble Bowden (80), et une force limite devant être surmontée pour ramener par pivotement le dossier (5) de la position d'entrée facile (5.2) en direction de la position d'utilisation (5.1),
**caractérisé en ce que**
la force limite est générée par une unité formant ressort de compensation (85) de l'unité de câble Bowden (80).

2. Siège de véhicule (1) selon la revendication 1, **caractérisé en ce que**, dans la position d'entrée facile (5.2), un premier moyen (60) coopère de façon verrouillable avec un deuxième moyen (70), l'un des moyens (60, 70) du dossier (5) et l'autre des moyens (60, 70) étant associés à l'assise (3) et les moyens (60, 70) se déplaçant l'un par rapport à l'autre après que la force limite a été surmontée et pendant que le dossier (5) est pivoté.

3. Siège de véhicule (1) selon la revendication 2, **caractérisé en ce que** le premier moyen est réalisé sous la forme d'une bascule (60) pourvue d'un premier bras (61) et d'un deuxième bras (62), le deuxième moyen est une coulisse (70), et l'un des bras (61, 62) coopère avec la coulisse (70).

4. Siège de véhicule (1) selon la revendication 3, **caractérisé en ce qu'**un bouton fixé à l'un des bras (61, 62) coopère avec la coulisse (70).

5. Siège de véhicule (1) selon la revendication 3, **caractérisé en ce qu'**un galet (65) monté sur l'un des bras (61, 62) coopère avec la coulisse (70).

6. Siège de véhicule (1) selon l'une des revendications 3 à 5, **caractérisé en ce que** l'unité formant câble Bowden (80) est fixée d'une part à l'autre des bras (61, 62) et d'autre part au dispositif de verrouillage de rail de siège (17).

7. Siège de véhicule (1) selon l'une des revendications 3 à 6, **caractérisé en ce que** la bascule (60) est fixée de manière rotative à l'assise (3), en particulier à une pièce d'assemblage inférieure (7.4) de l'assise (3).

8. Siège de véhicule (1) selon l'une des revendications 3 à 7, **caractérisé en ce que** la coulisse (70) est reliée de manière fixe au dossier (5).

9. Siège de véhicule (1) selon l'une des revendications 3 à 8, **caractérisé en ce que** la coulisse (70) comporte une première portion de coulisse (71) qui est associée à la position d'utilisation (5.1) et comporte une deuxième portion de coulisse (72) qui empêche, par coopération avec la bascule (60), de ramener par pivotement le dossier (5) de la position d'entrée facile (5.2) en direction de la position d'utilisation (5.1) tant que la force limite n'a pas été surmontée.

10. Siège de véhicule (1) selon la revendication 9, **caractérisé en ce que** la deuxième portion de coulisse (72) fait saillie dans la direction radiale au-delà de la première portion de coulisse (71).

11. Siège de véhicule (1) selon la revendication 9 ou 10, **caractérisé en ce que** la première portion de coulisse (71) s'étend en forme d'arc de cercle autour de l'axe de pivotement (S).

12. Siège de véhicule (1) selon l'une des revendications 1 à 11, **caractérisé en ce que** l'unité formant câble Bowden (80) comprend l'unité formant ressort de compensation (85), un premier câble (81) et un deuxième câble, l'unité formant ressort de compensation (85) comportant un ressort qui est disposé en termes de liaison fonctionnelle entre le premier câble (81) et le deuxième câble.

13. Siège de véhicule (1) selon la revendication 12, **caractérisé en ce que** le premier câble (81), le ressort et le deuxième câble sont montés en série.

14. Siège de véhicule (1) selon la revendication 12 ou 13, **caractérisé en ce que** le ressort de l'unité formant ressort de compensation est allongé lorsque la force limite est dépassée de telle sorte qu'une distance entre une extrémité du premier câble (81) et une extrémité du deuxième câble soit allongée.

15. Siège de véhicule (1) selon la revendication 12 ou 13, **caractérisé en ce que** le ressort de l'unité formant ressort de compensation est comprimé lorsque la force limite est dépassée de telle sorte qu'une distance entre une extrémité du premier câble (81) et une extrémité du deuxième câble soit allongée.
